# EUROPÄISCHE PATENTSCHRIFT

(11) **EP 2 637 911 B1**
(45) Veröffentlichungstag und Bekanntmachung des Hinweises auf die Patenterteilung: **17.01.2018**
(21) Anmeldenummer: 11791431.7
(22) Anmeldetag: 10.11.2011
(51) Int. Cl.: B62D 5/04, F16G 1/28

(54) **GERÄUSCHARMER RIEMENTRIEB**
LOW-NOISE BELT DRIVE
ENTRAÎNEMENT PAR COURROIE PEU BRUYANT

(30) Priorität: 10.11.2010 DE 102010050783
(43) Veröffentlichungstag der Anmeldung: 18.09.2013
(73) Patentinhaber: ThyssenKrupp Presta AG, 9492 Eschen (LI)
(72) Erfinder: LUBOJATZKY, Thomas, 70565 Stuttgart (DE)
(74) Vertreter: Lenzing Gerber Stute
(86) Internationale Anmeldenummer: PCT/EP2011/005651
(87) Internationale Veröffentlichungsnummer: WO 2012/062470

(56) Entgegenhaltungen:
- BE-A- 520 967
- DE-A1- 10 052 275
- GB-A- 1 052 264
- US-A- 3 117 459
- US-A- 3 365 966

## Beschreibung

Die vorliegende Erfindung betrifft eine elektromechanische Servolenkung mit den Merkmalen des Oberbegriffs des Anspruchs 1.

Bei elektromechanischen Servolenkungen werden Zahnriemenantriebe bevorzugt dort eingesetzt, wo hohe Unterstützungsleistung und eine geringe Geräuschentwicklung gefordert werden. Eine solche Lenkung ist beispielsweise aus der Druckschrift DE 10 2007 004 521 A1 bekannt. Der Zahnriementrieb verbindet die Ausgangswelle eines Elektromotors mit der Eingangswelle eines Getriebes, dass die Drehbewegung in eine Linearbewegung einer Zahnstange umsetzt. Hier wird üblicherweise ein Kugelgewindetrieb eingesetzt. Die übliche Bauweise des Zahnriementriebs sieht vor, dass der Riemen auf seiner Innenseite mit quer zur Laufrichtung angeordneten Zähnen versehen ist, die mit entsprechenden Nuten auf den Riemenscheiben kämmen. Die Hüllkurve der Riemenscheiben ist exakt zylindrisch, so dass der Zahnriemen in Axialrichtung der beiden Wellen nicht fixiert ist. Um das Wandern des Zahnriemens auf den Scheiben zu verhindern, ist die kleinere Riemenscheibe außen mit sogenannten Bordscheiben versehen, die das Wandern des Zahnriemens in Axialrichtung begrenzen.

Bei solchen Riementrieben entstehen Schwingungen des Riemens, die durch die in regelmäßigen Abständen quer zur Laufrichtung vorgesehenen Zähne erzeugt werden. Bei bestimmten Drehzahlen des Riementriebs kann der Riemen durch die Kontur der Riemenscheibe zu Schwingungen angeregt werden. Es werden deshalb große Anstrengungen unternommen, einen solchen Riementrieb geräuscharm zu gestalten. Die üblichen Maßnahmen betreffen die Form der einzelnen Zähne an der Innenseite des Zahnriemens und deren Ausrichtung. So sind beispielsweise auch Zahnriemen bekannt, die eine Pfeilverzahnung aufweisen. Hierbei können die beiden Abschnitte eines gepfeilten Zahnes auch in Laufrichtung des Zahnriemens gegeneinander versetzt sein. Solche Zahnriemen sind sehr teuer. Die dazu passenden Riemenscheiben sind ebenfalls in der Herstellung sehr aufwändig.

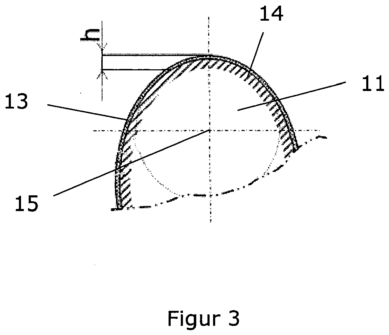

Das Dokument BE 520 967 A, welches den Oberbegriff des Anspruchs 1 offenbart, betrifft ein Endlosgetriebe mit Laufrollen, über die ein Riemen gespannt ist, der sich automatisch zentriert. In den Fig. 3 bis 8 sind verschiedene Laufrollen mit korrespondierenden Riemen dargestellt, wobei in der Fig. 6 eine Laufrolle mit konvexer Außenkontur und ein Riemen mit einer konkaven Innenkontur dargestellt ist.

Es ist deshalb Aufgabe der vorliegenden Erfindung, eine gattungsgemäße Servolenkung hinsichtlich ihrer Geräuschentwicklung zu verbessern.

Diese Aufgabe wird von einer Servolenkung mit den Merkmalen des Anspruchs 1 gelöst.

Weil bei einem Riementrieb mit einem Riemen, der quer zu seiner Laufrichtung eine von der Riemenscheibe her gesehene konkave Innenkontur aufweist, und mit entsprechenden Riemenscheiben, die quer zur Drehrichtung mit einer entsprechenden konvexen Außenkontur versehen sind, ein Randbereich des Riemens die konvexe Außenkontur der Riemenscheibe von außen umgreift, wird die Schwingungsneigung des Riemens im Bereich der freien Trume reduziert. Die Biegesteifigkeit des Riemens wird erhöht. Weil der Riemen ein Zahnriemen ist und die Riemenscheiben dazu passende Zahnriemenscheiben sind, ist außerdem die Anregung des Riemens beim Auftreffen eines Zahns auf die entsprechende Nut der Riemenscheibe weniger ausgeprägt.

Bei einer bevorzugten Ausführungsform können die Bordscheiben zur Zentrierung des Zahnriemens entfallen. Eventuelle kinematische Probleme, die aufgrund der unterschiedlichen Umfangsgeschwindigkeiten der Riemenräder in Axialrichtung der Verzahnung entstehen könnten, können durch ein vergrößertes Flankenspiel zwischen dem Zahn und der Nut im Randbereich ausgeglichen werden. Es kann auch vorgesehen sein, den Randbereich frei von Zähnen auszubilden.

Eine besonders gute Unterdrückung der Schwingungsneigung wird erzielt, wenn der Zahnriemen im Randbereich nach innen weisende, umlaufende Rippen aufweist, die in entsprechend frei gestellter Bereiche der Riemenscheibe eingreifen oder die Riemenscheibe außen umgreifen.

Nachfolgend werden Ausführungsbeispiele der vorliegenden Erfindung anhand der Zeichnung näher beschrieben. Es zeigen:
- Figur 1:: Einen Querschnitt durch eine Riemenscheibe mit konvexen Außenpro-fil und einen entsprechenden Riemen in einer schematischen Darstel-lung;
- Figur 2:: Einen Querschnitt durch eine Riemenscheibe mit etwa rechteckigem Querschnitt und einen Riemen, der nach innen weisende Führungsrip-pen aufweist, die nicht Teil der Erfindung sind; sowie
- Figur 3:: Eine schematische Seitenansicht eines Riementriebs unter Verwen-dung des Riemens aus Figur 2.

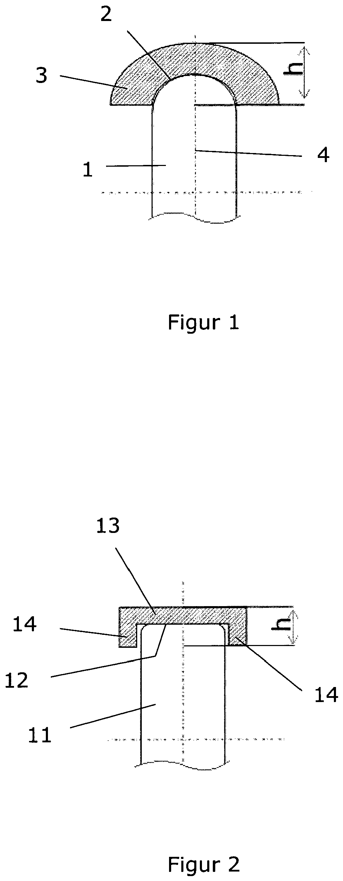

In der Figur 1 ist einem Querschnitt eine Riemenscheibe 1 dargestellt, die eine äußere konvexe Lauffläche 2 für einen entsprechend konkav ausgebildeten Zahnriemen 3 aufweist. Der Zahnriemen 3 ist in einem mittigen Bereich nah einer Symmetrieebene 4, die senkrecht auf der Zeichenebene steht, mit einer Verzahnung versehen, die formschlüssig und spielfrei in eine entsprechende Verzahnung der Riemenscheibe 1 eingreift. Rechts und links der Ebene 4 ist der Zahnriemen 3 um den konvexen Bereich 2 der Riemenscheibe 1 herum gezogen. Der Zahnriemen 3 zentriert sich auf diese Weise beim Umlauf selbsttätig auf der Riemenscheibe 1. Eine zweite Riemenscheibe ist bei anderem Durchmesser mit einer entsprechenden Kontur versehen. Kennzeichnend ist, dass durch die Kontur des Zahnriemens 3 die üblicherweise erforderlichen seitlichen Bordscheiben entfallen können und dass die dargestellte Querschnittskontur des Riemens mit der in Figur 1 angedeuteten Höhe h eine besondere Stabilität gegenüber induzierten Schwingungen senkrecht zur Laufrichtung im Bereich der freien Trume gewährleistet, wodurch die Geräuschentwicklung minimiert wird.

Figur 2 zeigt in entsprechender Darstellung eine andere Riemenscheibe 11, die im wesentlichen einen rechteckigen Querschnitt aufweist und nicht Teil der Erfindung ist. Eine äußere Umfangsfläche 12 ist mit einer Verzahnung versehen, die mit einer entsprechenden Verzahnung eines Riemens 13 kämmt. Der Riemen 13 ist seitlich mit Rippen 14 ausgestattet, die parallel zu seiner Umlaufrichtung nach innen über die Ebene der Verzahnung hinaus stehen. Die Rippen 14 zentrieren einerseits den Riemen 13 auf der Riemenscheibe 11. Andererseits versteifen die Rippen 14 den Riemen 13, so dass wiederum eine Minimierung der Geräuschentwicklung erzielt wird.

Die Rippen 14 bilden einen Randbereich des Riemens, der die konvexe Außenkontur der Riemenscheibe von außen umgreift.

Die Figur 3 zeigt die Anordnung aus Figur 2 in einer Seitenansicht. Die Riemenscheibe 11 ist rund und drehbar um einen Drehpunkt 15 gelagert. Der Riemen 13 ist über die Riemenscheibe 11 geführt. Die Rippen 14 übergreifen die Riemenscheibe 11 seitlich um einen Betrag, der eingezeichneten Höhe h entspricht.

Durch die Verzahnung sind die dargestellten Riemenbauarten schlupffrei in einem Riementrieb einzusetzen. Die Kontur des Riemens unterdrückt Eigenschwingungen in den Bereichen zwischen den beiden Riemenscheiben. Im Flankenbereich können die Riemen eine gewisse Elastizität aufweisen, die den Umschlingungsvorgang des Riemens beim Eingriff mit den Riemenscheiben fördern. Es kann hierfür vorgesehen sein, dass zugfeste, nicht längendehnbare Fasern nur in der Mitte der Riemen 3 beziehungsweise 13 vorgesehen sind, also dort, wo die Verzahnung im Bereich der Ebene 4 angeordnet ist.

Es kann auch vorgesehen sein, dass insbesondere bei der Ausführungsform nach Figur 1 die Verzahnung über die gesamte konvexe Oberfläche 2 der Riemenscheibe 1 geführt ist. Es ist dann vorteilhaft, die Verzahnung durch entsprechende Gestaltung der Nuten auf der Riemenscheibe 1 oder der Zähne auf der Innenseite des Riemens 3 in den Randbereichen mit einem gewissen Spiel zu versehen, dass die erforderliche Verformung erlaubt. Dabei kann bei geringen Höhen h im Bereich von wenigen Millimetern auch vorgesehen sein, die Profilverschiebung der Verzahnung von der Mitte der Ebene 4 zu den Rändern hin zu variieren.

Insgesamt ergibt sich durch die dargestellten Riemenbauarten die Möglichkeit, einen Riementrieb in einer elektromechanischen Kraftfahrzeugservolenkung ohne die üblichen Bordscheiben auszuführen und dadurch in Radialrichtung der Riemenscheiben Bauraum zu sparen. Außerdem wird die Geräuschentwicklung des Riementriebes durch die erhöhte Biegesteifigkeit der dargestellten Riemen minimiert.

## Patentansprüche

1. Elektromechanische Servolenkung für Kraftfahrzeuge, mit einem Lenkgetriebe, in dem ein Riementrieb zur Kraftübertragung zwischen einem Servomotor und einem Getriebe vorgesehen ist, der einen Riemen (3, 13) und zwei mittels des Riemens (3, 13) gekoppelte Riemenscheiben (1, 11) umfasst, wobei der Riemen (3, 13) quer zu seiner Laufrichtung eine von der Riemenscheibe (1, 11) her gesehene konkave Innenkontur aufweist und dass entsprechende Riemenscheiben (1, 11) quer zur Drehrichtung mit einer entsprechenden konvexen Außenkontur (2, 12) versehen sind, wobei ein Randbereich des Riemens (3, 13) die konvexe Außenkontur (2, 12) der Riemenscheibe (1, 11) von außen umgreift, **dadurch gekennzeichnet, dass** der Riemen (3, 13) ein Zahnriemen ist.

2. Servolenkung nach Anspruch 1, **dadurch gekennzeichnet, dass** die Riemenscheiben (1, 11) keine Bordscheiben aufweisen.

3. Servolenkung nach einem der vorhergehenden Ansprüche, **dadurch gekennzeichnet, dass** ein vergrößertes Flankenspiel zwischen dem Zahn und der Nut im Randbereich vorgesehen ist.

4. Servolenkung nach einem der vorhergehenden Ansprüche, **dadurch gekennzeichnet, dass** der Randbereich der Riemenscheiben (1, 11) und/oder des Riemens (3, 13) frei von Zähnen ist.

5. Servolenkung nach einem der vorhergehenden Ansprüche, **dadurch gekennzeichnet, dass** der Zahnriemen im Randbereich nach innen weisende, umlaufende Rippen aufweist, die in entsprechend frei gestellter Bereiche der Riemenscheibe (1, 11) eingreifen oder die Riemenscheibe (1, 11) außen umgreifen.

## Claims

1. Electromechanical power steering for motor vehicles, with a steering gearbox in which a belt drive is provided between a servo motor and a gear drive which has a belt (3, 13) and two belt pulleys (1, 11) coupled by means of the belt (3, 13), wherein the belt (3, 13) has a concave inner contour seen from the belt pulley (1, 11) transverse to its running direction and in that corresponding belt pulleys (1, 11) are provided transverse to the rotational direction with a corresponding convex outer contour (2, 12), wherein an edge region of the belt (3, 13) encompasses the convex outer contour (2, 12) of the belt pulley (1, 11) from outside, **characterised in that** the belt (3, 13) is a pulley flanges belt.

2. Power steering according to Claim 1, **characterised in that** the belt pulleys (1, 11) do not have flanged pulleys.

3. Power steering according to any one of the preceding claims, **characterised in that** an enlarged backlash is provided between the tooth and the groove in the edge region.

4. Power steering according to any one of the preceding claims, **characterised in that** the edge region of the belt pulleys (1, 11) and/or the belt (3, 13) is free of teeth.

5. Power steering according to any one of the preceding claims, **characterised in that** the toothed belt has circumferential ribs pointing inwards in the edge region, said ribs engage into correspondingly freely placed regions of the belt pulley (1, 11) or externally encompass the belt pulley (1, 11).

## Revendications

1. Direction assistée électromécanique pour véhicules à moteur, comprenant un mécanisme de direction incluant un entraînement par courroie pour la transmission de forces entre un servomoteur et un engrenage, lequel entraînement comprend une courroie (3, 13) et deux poulies de courroie (1, 11) accouplées au moyen de la courroie (3, 13), la courroie (3, 13) présentant, dans une direction transversale à son défilement et vu depuis la poulie de courroie (1, 11), un profil intérieur concave et dans lequel les poulies de courroie (1, 11) correspondantes sont dotées, dans une direction transversale à leur rotation, d'un profil extérieur convexe (2, 12) correspondant, de sorte qu'une marge extérieure de la courroie (3, 13) s'agrippe, de l'extérieur, sur le profil convexe externe(2, 12) de la poulie de courroie (1, 11), **caractérisée en ce que** la courroie (3, 13) est une courroie dentée.

2. Direction assistée selon la revendication 1, **caractérisée en ce que** les poulies de courroie (1, 11) ne présentent pas de flasques.

3. Direction assistée selon l'une quelconque des revendications précédentes, **caractérisée en ce qu'un** jeu d'engrènement accru est ménagé entre la dent et la gorge dans la marge extérieure.

4. Direction assistée selon l'une quelconque des revendications précédentes, **caractérisée en ce que** la marge extérieure des poulies de courroie (1, 11) et/ou de la courroie (3, 13) est exempte de dents.

5. Direction assistée selon l'une quelconque des revendications précédentes, **caractérisée en ce que** la courroie dentée présente, dans sa marge extérieure, des nervures périphériques orientées vers l'intérieur qui s'agrippent dans des zones dégagées correspondantes de la poulie de courroie (1, 11) ou enserrent la poulie de courroie (1, 11) sur sa face externe.
